(19) Europäisches Patentamt / European Patent Office / Office européen des brevets

(11) **EP 4 769 527 A1**

(12) **EUROPEAN PATENT APPLICATION**
published in accordance with Art. 153(4) EPC

(43) Date of publication:
01.07.2026 Bulletin 2026/27

(21) Application number: 25845052.7

(22) Date of filing: 11.07.2025

(51) International Patent Classification (IPC):
$H01M\ 4/133^{(2010.01)}$    $H01M\ 4/587^{(2010.01)}$
$H01M\ 4/36^{(2006.01)}$    $H01M\ 4/38^{(2006.01)}$
$H01M\ 4/1393^{(2010.01)}$    $H01M\ 4/04^{(2006.01)}$
$H01M\ 10/052^{(2010.01)}$    $H01M\ 4/02^{(2006.01)}$

(52) Cooperative Patent Classification (CPC):
H01M 4/02; H01M 4/04; H01M 4/133;
H01M 4/1393; H01M 4/36; H01M 4/38;
H01M 4/587; H01M 10/052; Y02E 60/10

(86) International application number:
PCT/KR2025/010158

(87) International publication number:
WO 2026/023955 (29.01.2026 Gazette 2026/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 23.07.2024 KR 20240097451

(71) Applicant: LG ENERGY SOLUTION, LTD.
Seoul 07335 (KR)

(72) Inventors:
- OH, Hyun Hee
  Seoul 07335 (KR)
- KIM, So Yeon
  Seoul 07335 (KR)
- LIM, Dong Ju
  Seoul 07335 (KR)
- YOON, Jong Su
  Seoul 07335 (KR)

(74) Representative: Plasseraud IP
104 Rue de Richelieu
CS92104
75080 Paris Cedex 02 (FR)

(54) **ANODE FOR LITHIUM SECONDARY BATTERY AND MANUFACTURING METHOD THEREFOR**

(57) The present disclosure relates to a negative electrode for a lithium secondary battery and a method of manufacturing the same. The negative electrode has a pattern structure in which a first region and a second region having a predetermined deviation in L* of a CIE LAB color difference meter are alternately disposed on a surface of a negative electrode active layer, thereby exhibiting excellent adhesion between a negative electrode current collector and the negative electrode active layer. In addition, the negative electrode has advantages of not only improved swelling phenomenon during charging but also excellent rapid charging performance.

【FIG. 3】

EP 4 769 527 A1

EP 4 769 527 A1

**Description**

[Technical Field]

The present disclosure relates to a negative electrode for a lithium secondary battery and a manufacturing method thereof.
This application claims the benefit of priority from Korean Patent Application No. 10-2024-0097451, filed on July 23, 2024, the entire contents disclosed therein are incorporated by reference into this disclosure.

[Background]

Recently, lithium secondary batteries have been widely applied not only to small devices such as portable electronic devices but also to medium and large-sized devices such as battery packs for hybrid vehicles or electric vehicles, and power storage devices. In particular, as interest in environmental issues has recently grown, the demand base for high-capacity batteries is expanding due to the growth of the market for high-capacity battery-employing devices such as electric vehicles and hybrid electric vehicles, which can replace vehicles using fossil fuels such as gasoline vehicles and diesel vehicles, which are one of the main causes of air pollution.
In general, a lithium secondary battery is a power generation element capable of charging and discharging, which has a stacked structure of positive electrode/separator/negative electrode. When a lithium secondary battery is charged, a lithium deintercalation reaction is induced in which lithium contained in the positive electrode active material is oxidized and released at the positive electrode inside the battery, and a lithium insertion reaction occurs in which lithium is reduced and enters the negative electrode active material at the negative electrode. Since the deintercalation reaction in the positive electrode active material is faster than the insertion reaction in the negative electrode active material, performance such as speed during charging and discharging of the lithium secondary battery is mainly determined by the negative electrode.
Materials containing graphite are widely used as the negative electrode active material of the negative electrode. The average potential when a material containing graphite releases lithium is approximately 0.2 V (based on Li/Li$^+$), and the discharge potential exhibits a relatively flat aspect. For this reason, when graphite is used as the negative electrode active material, the voltage of the secondary battery has the advantage of being high and constant.
Amorphous carbon or crystalline carbon is used as the negative electrode active material used in the negative electrode. Among these, crystalline carbon is mainly used because it has high capacity. Such crystalline carbon includes graphite-based carbon such as natural graphite and artificial graphite.
The graphite-based carbon has different characteristics depending on its type. For example, natural graphite is inexpensive and exhibits excellent adhesion to the current collector, but is relatively inferior in terms of high-rate charge/discharge performance or lifespan characteristics compared to artificial graphite. On the other hand, the artificial graphite has weak adhesion to the current collector because the content of surface defects or functional groups is low. In addition, when propylene carbonate (PC) is used in the electrolyte for the purpose of improving low-temperature performance, the artificial graphite has a problem in that the propylene carbonate causes exfoliation of each layer constituting the interlayer structure of the graphite.
Accordingly, there have been attempts to apply mixed graphite, which appropriately combines natural graphite and artificial graphite to take advantage of each, as the negative electrode active material of lithium secondary batteries. However, the mixed graphite has a limitation in that it exhibits inferior characteristics in lifespan characteristics and impact resistance stability due to low adhesion to the current collector. In addition, when the content of the negative electrode active material is increased for high-capacity design of the electrode, there is a problem in that not only the energy density decreases but also the lifespan characteristics deteriorate due to the occurrence of a swelling phenomenon caused by lithium insertion into graphite during charging of the lithium secondary battery.
Therefore, there is a high need for negative electrode technology with excellent lifespan characteristics due to high adhesion to the current collector and with improved swelling phenomenon during charging of lithium secondary batteries while having fast charging speed.

[Related Art Document]

Korean Laid-Open Patent Publication No. 10-2018-0028797
Korean Patent Registration Publication No. 10-2022-0057715

[Summary]

[Technical Problem]

An object of the present disclosure is to provide a negative electrode having excellent lifespan characteristics due to excellent adhesion to a current collector, having a fast-charging speed while improving a swelling phenomenon during charging of a lithium secondary battery, and a method of manufacturing the same.

[Technical Solution]

The present disclosure provides a negative electrode comprising:

a negative electrode current collector; and a negative electrode active layer disposed on at least one side of the negative electrode current collector and including a carbon-based negative electrode active material;
wherein a surface of the negative electrode active layer includes a form in which a first region and a second region having $\Delta L^*$ of 0.45 or more represented by Equation 1 based on $L^*$ according to a CIE LAB color difference meter are alternately disposed one or more times:

$$[\text{Equation 1}]$$

$$\Delta L^* = |L_1{}^* - L_2{}^*|$$

In Equation 1,

$L_1{}^*$ represents an average $L^*$ value of the first region, and
$L_2{}^*$ represents an average $L^*$ value of the second region.

At this time, the average $L_1{}^*$ value of the first region may be in a range of 35 to 48, and the average $L_2{}^*$ value of the second region may be in a range of 36 to 50.

The first region and the second region formed on the surface of the negative electrode active layer may form any one or more patterns selected from a stripe pattern, a concentric circle pattern, a check pattern, and a dot pattern.

In addition, the negative electrode may have a rectangular shape and may have a structure in which a negative electrode tab is formed on a first side of the rectangular shape, and between the first side and a third side facing the first side, the surface of the negative electrode active layer may include a form in which the first region and the second region are alternately disposed one or more times.

Alternatively, the negative electrode may have a rectangular shape and may have a structure in which a negative electrode tab is formed on a first side of the rectangular shape, and between a second side and a fourth side adjacent to the first side, the surface of the negative electrode active layer may include a form in which the first region and the second region are alternately disposed one or more times.

A ratio (D2:D1) of an average width (D2) of the second region to an average width (D1) of the first region may be in a range of 0.4:1 to 1: 1.

The carbon-based negative electrode active material may include one or more selected from natural graphite, artificial graphite, Kish graphite, pyrolytic carbon, carbon microbeads, mesophase fired carbon made from tar or pitch as a raw material, and graphitized coke.

The negative electrode active layer may include one or more silicon-based negative electrode active materials selected from Si, SiC, and $SiO_q$ (where $0.5 \leq q \leq 2.5$).

In addition, an interface resistance between the negative electrode current collector and the negative electrode active layer may be in a range of $0.1~\text{m}\Omega\cdot\text{m}^2$ to $8.0~\text{m}\Omega\cdot\text{m}^2$.

A tortuosity of the negative electrode active layer may be in a range of 2.0% to 8.0%.

Furthermore, the present disclosure provides a method of manufacturing a negative electrode comprising:

applying a negative electrode slurry comprising a carbon-based negative electrode active material on at least one side of a negative electrode current collector (S1);
applying a magnetic field to the applied negative electrode slurry (S2); and
drying the negative electrode slurry to which the magnetic field has been applied to form a negative electrode active layer (S3);
wherein in the step of applying the magnetic field (S2),
a magnetic field in an average range of 1,000 G to 9,000 G is applied to region A of the negative electrode slurry corresponding to the first region of the negative electrode active layer described above, and a magnetic field is not applied to region B of the negative electrode slurry corresponding to the second region, or a magnetic field in a range of 5,000 G or less is applied.

In the step of applying the magnetic field (S2), an intensity of the magnetic field applied to region B of the negative electrode slurry may be at an intensity of 0.1% to 0.9% of the intensity of the magnetic field applied to region A.

In addition, in the step of applying the magnetic field (S2), the magnetic field may be performed by a lower application method in which the magnetic field is applied from a lower portion of the negative electrode.

[Advantageous Effects]

The negative electrode for the lithium secondary battery according to the present disclosure has a pattern structure in which a first region and a second region having a predetermined deviation in L* of a CIE LAB color difference meter are alternately disposed on a surface of a negative electrode active layer, thereby exhibiting excellent adhesion between a negative electrode current collector and the negative electrode active layer. In addition, the negative electrode has advantages of not only improved swelling phenomenon during charging but also excellent rapid charging performance.

[Brief Description of the Drawings]

FIG. 1 is a top view illustrating a surface of a negative electrode according to the present disclosure.

FIG. 2 is a cross-sectional view illustrating a cross-sectional structure in a thickness direction (z-direction) of a negative electrode 10 for a lithium secondary battery according to the present disclosure.

FIG. 3 is an image photographing a surface of a negative electrode being manufactured according to the present disclosure.

FIG. 4 is a cross-sectional view of a negative electrode schematically illustrating an a-b axis crystal surface state of a carbon-based negative electrode active material depending on whether the carbon-based negative electrode active material is aligned and/or oriented.

FIG. 5 is a cross-sectional view illustrating a cross-sectional structure in a thickness direction (z-direction) of a negative electrode 10 for a lithium secondary battery according to the present disclosure.

[Detailed Description]

The present disclosure may have various modifications and various embodiments, and specific embodiments will be described in detail in the following detailed description.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in this specification, "average particle diameter $(D_{50})$" means a particle diameter at which a cumulative value becomes 50% in a particle diameter distribution of particles, and is also referred to as median diameter. The average particle diameter can be measured by a method conventionally applied in the art. For example, the average particle diameter can be measured using a particle size analyzer or an analyzer using a laser diffraction scattering particle size distribution measurement method, but is not limited thereto.

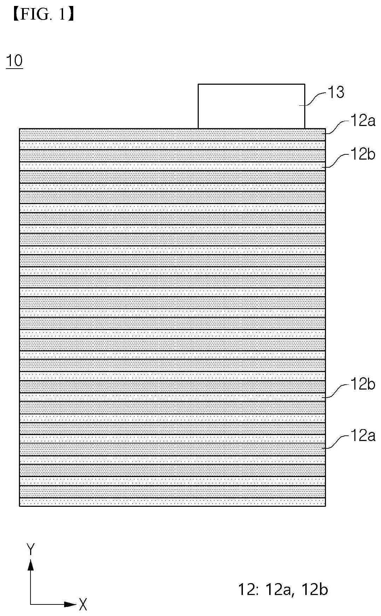

In this specification, "thickness direction of the negative electrode active layer" may be the same as a direction perpendicular to a plane formed by a combination of a width direction and a longitudinal direction of the negative electrode active layer, and may be defined as "z-axis direction" in FIG. 1.

Furthermore, in this specification, "color coordinates according to a CIE LAB color difference meter" means coordinates in a CIE color space, which is a color value defined by CIE (Commission International de l'Eclairage, International Commission on Illumination), and an arbitrary position in the CIE color space can be expressed by three coordinate values of L*, a*, and b*.

Here, the L* value represents brightness, wherein L*=0 represents black and L*=100 represents white. In addition, the a* value indicates whether a color having the corresponding color coordinates is biased toward pure magenta or pure green, and the b* value indicates whether a color having the corresponding color coordinates is biased toward pure yellow or pure blue. Specifically, based on a CIE LAB color difference meter, a color having an average color coordinate (L*) for brightness of 60 or less can be defined as black, and the black may include achromatic colors such as gray and black.

Hereinafter, the present disclosure will be described in more detail.

**Negative Electrode for Lithium Secondary Battery**

In one embodiment, the present disclosure provides a negative electrode comprising:

a negative electrode current collector; and a negative electrode active layer disposed on at least one side of the negative electrode current collector and comprising a carbon-based negative electrode active material;

wherein a surface of the negative electrode active layer includes a form in which a first region and a second region having $\Delta L^*$ of 0.45 or more represented by Equation 1 based on $L^*$ according to a CIE LAB color difference meter are alternately disposed one or more times:

$$[\text{Equation 1}]$$

$$\Delta L^* = |L_1^* - L_2^*|$$

The negative electrode according to the present disclosure means a negative electrode for a lithium secondary battery. The negative electrode includes a negative electrode active layer comprising a carbon-based negative electrode active material on at least one side of a negative electrode current collector. The negative electrode active layer has a form in which a first region and a second region are alternately disposed one or more times on a surface. The first region and the second region may form a pattern with a predetermined deviation in $L^*$ according to a CIE LAB color difference meter.

The negative electrode has a structure in which a first region and a second region having a predetermined deviation in $L^*$ are alternately disposed one or more times, thereby exhibiting excellent adhesion between the negative electrode current collector and the negative electrode active layer due to improved interface characteristics. In addition, the negative electrode has advantages of not only improved swelling phenomenon during charging of a lithium secondary battery but also fast charging speed by lowering tortuosity of the negative electrode active layer, and significantly improving a swelling phenomenon caused by insertion of lithium ions.

For example, an interface resistance between the negative electrode current collector and the negative electrode active layer of the negative electrode may be in a range of 0.1 m$\Omega\cdot$m$^2$ to 8.0 m$\Omega\cdot$m$^2$ due to improved interface characteristics. Specifically, the interface resistance between the negative electrode current collector and the negative electrode active layer may be in ranges of 0.1 m$\Omega\cdot$m$^2$ to 7.5 m$\Omega\cdot$m$^2$; 0.1 m$\Omega\cdot$m$^2$ to 7.0 m$\Omega\cdot$m$^2$; 0.1 m$\Omega\cdot$m$^2$ to 6.5 m$\Omega\cdot$m$^2$; 0.1 m$\Omega\cdot$m$^2$ to 6.0 m$\Omega\cdot$m$^2$; 0.1 m$\Omega\cdot$m$^2$ to 5.5 m$\Omega\cdot$m$^2$; 0.1 m$\Omega\cdot$m$^2$ to 5.0 m$\Omega\cdot$m$^2$; 0.1 m$\Omega\cdot$m$^2$ to 4.5 m$\Omega\cdot$m$^2$; 0.5 m$\Omega\cdot$m$^2$ to 7.5 m$\Omega\cdot$m$^2$; 0.5 m$\Omega\cdot$m$^2$ to 5.0 m$\Omega\cdot$m$^2$; 0.5 m$\Omega\cdot$m$^2$ to 4.5 m$\Omega\cdot$m$^2$; 4.0 m$\Omega\cdot$m$^2$ to 8.0 m$\Omega\cdot$m$^2$; 3.0 m$\Omega\cdot$m$^2$ to 5.5 m$\Omega\cdot$m$^2$; 2.7 m$\Omega\cdot$m$^2$ to 5.1 m$\Omega\cdot$m$^2$; 1.0 m$\Omega\cdot$m$^2$ to 4.35 m$\Omega\cdot$m$^2$; 1.5 m$\Omega\cdot$m$^2$ to 4.35 m$\Omega\cdot$m$^2$; 2.0 m$\Omega\cdot$m$^2$ to 4.35 m$\Omega\cdot$m$^2$; 2.5 m$\Omega\cdot$m$^2$ to 4.35 m$\Omega\cdot$m$^2$; 2.8 m$\Omega\cdot$m$^2$ to 4.35 m$\Omega\cdot$m$^2$; 3.0 m$\Omega\cdot$m$^2$ to 4.35 m$\Omega\cdot$m$^2$; 3.1 m$\Omega\cdot$m$^2$ to 4.3 m$\Omega\cdot$m$^2$; 3.4 m$\Omega\cdot$m$^2$ to 4.1 m$\Omega\cdot$m$^2$; 3.6 m$\Omega\cdot$m$^2$ to 4.35 m$\Omega\cdot$m$^2$; 3.1 m$\Omega\cdot$m$^2$ to 4.1 m$\Omega\cdot$m$^2$; or 3.6 m$\Omega\cdot$m$^2$ to 4.0 m$\Omega\cdot$m$^2$. The interface resistance may mean an average value of resistance induced between the negative electrode current collector and the negative electrode active layer. The present disclosure can prevent or further improve a decrease in interface adhesion between the negative electrode active layer and the negative electrode current collector by satisfying the interface resistance between the negative electrode active layer and the negative electrode current collector in the above-described range.

In addition, a tortuosity of the negative electrode active layer of the negative electrode may be in a range of 2.0% to 8.0%. Specifically, the tortuosity of the negative electrode active layer may be in ranges of 3.0% to 8.0%; 4.0% to 8.0%; 5.0% to 8.0%; 3.0% to 7.0%; 4.0% to 7.0%; 4.0% to 6.5%; 5.0% to 6.5%; 4.0% to 6.0%; 3.5% to 6.0%; 4.0% to 5.0%; 4.0% to 4.9%; 4.0% to 4.5%; 4.2% to 4.8%; or 4.1% to 4.4%. The tortuosity of the negative electrode active layer is a parameter that indirectly indicates a length of a path provided by pores included inside the negative electrode active layer so that an electrolyte or the like can move from a surface of the negative electrode active layer to the negative electrode current collector. The tortuosity means that the lower the ratio, the shorter the length of the path. The present disclosure can increase a rate at which lithium ions are inserted into the carbon-based negative electrode active material during charging of a lithium secondary battery by adjusting the tortuosity of the negative electrode active layer to the above-described range. Therefore, the present disclosure can provide a negative electrode having excellent rapid charging performance.

In addition, the negative electrode may satisfy Equation 2 below:

$$[\text{Equation 2}] \quad 0.01 \text{ m}^2 \leq \text{MP}_R/\text{R}_{pore} \leq 0.20 \text{ m}^2$$

In Equation 2,

MP$_R$ represents an interface resistance between the negative electrode active layer and the negative electrode current collector (unit: mΩ·cm$^2$), and

R$_{pore}$ represents a pore resistance in the negative electrode active layer (unit: Ω).

Specifically, the negative electrode may satisfy Equation 2 in ranges of 0.01 m$^2$ to 0.19 m$^2$ (i.e., 0.01 m$^2$ ≤ MP$_R$/R$_{pore}$ ≤ 0.19 m$^2$); 0.05 m$^2$ to 0.19 m$^2$ (i.e., 0.05 m$^2$ ≤ MP$_R$/R$_{pore}$ ≤ 0.19 m$^2$); 0.09 m$^2$ to 0.19 m$^2$ (i.e., 0.09 m$^2$ ≤ MP$_R$/R$_{pore}$ ≤ 0.19 m$^2$); 0.1 m$^2$ to 0.19 m$^2$ (i.e., 0.1 m$^2$ ≤ MP$_R$/R$_{pore}$ ≤ 0.19 m$^2$); 0.12 m$^2$ to 0.19 m$^2$ (i.e., 0.12 m$^2$ ≤ MP$_R$/R$_{pore}$ ≤ 0.19 m$^2$); 0.13 m$^2$ to 0.19 m$^2$ (i.e., 0.13 m$^2$ ≤ MP$_R$/R$_{pore}$ ≤ 0.19 m$^2$); 0.14 m$^2$ to 0.19 m$^2$ (i.e., 0.14 m$^2$ ≤ MP$_R$/R$_{pore}$ ≤ 0.19 m$^2$); 0.09 m$^2$ to 0.18 m$^2$ (i.e., 0.09 m$^2$ ≤ MP$_{R/Rpore}$ ≤ 0.18 m$^2$); 0.11 m$^2$ to 0.18 m$^2$ (i.e., 0.11 m$^2$ ≤ MP$_R$/R$_{pore}$ ≤ 0.18 m$^2$); 0.13 m$^2$ to 0.175 m$^2$ (i.e., 0.13 m$^2$ ≤ MP$_R$/R$_{pore}$ ≤ 0.175 m$^2$); 0.15 m$^2$ to 0.175 m$^2$ (i.e., 0.15 m$^2$ ≤ MP$_R$/R$_{pore}$ ≤ 0.175 m$^2$); 0.15 m$^2$ to 0.17 m$^2$ (i.e., 0.15 m$^2$ ≤ MP$_R$/R$_{pore}$ ≤ 0.17 m$^2$); 0.14 m$^2$ to 0.16 m$^2$ (i.e., 0.14 m$^2$ ≤ MP$_R$/R$_{pore}$ ≤ 0.16 m$^2$); 0.05 m$^2$ to 0.15 m$^2$ (i.e., 0.05 m$^2$ ≤ MP$_R$/R$_{pore}$ ≤ 0.15 m$^2$); 0.1 m$^2$ to 0.14 m$^2$ (i.e., 0.1 m$^2$ ≤ MP$_R$/R$_{pore}$ ≤ 0.14 m$^2$); 0.05 m$^2$ to 0.10 m$^2$ (i.e., 0.05 m$^2$ ≤ MP$_R$/R$_{pore}$ ≤ 0.10 m$^2$); or 0.13 m$^2$ to 0.16 m$^2$ (i.e., 0.13 m$^2$ ≤ MP$_R$/R$_{pore}$ ≤ 0.16 m$^2$).

Equation 2 is a parameter indicating swelling characteristics of the negative electrode active layer as a whole in which the interface resistance between the negative electrode active layer and the negative electrode current collector and the pore resistance included in the negative electrode active layer are organically combined. An increase in the pore resistance of the negative electrode active layer means that a degree of freedom of a-b axis crystal surfaces of the carbon-based negative electrode active material included in the negative electrode active layer increases. This affects interface characteristics between the negative electrode active layer and the negative electrode current collector. Accordingly, the negative electrode of the present disclosure can effectively suppress a swelling phenomenon of the negative electrode during charging while increasing adhesion between the negative electrode active layer and the negative electrode current collector by adjusting Equation 2 to the above-described range.

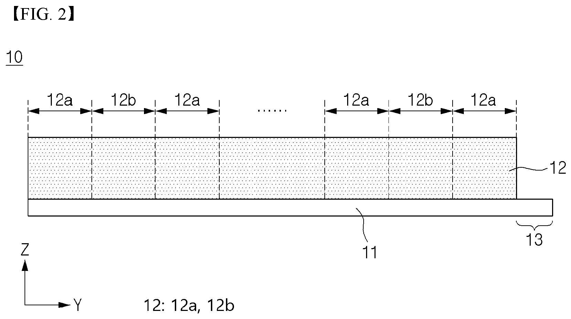

FIG. 1 is a top view illustrating a surface of a negative electrode 10 for a lithium secondary battery according to the present disclosure, and FIG. 2 is a cross-sectional view illustrating a cross-sectional structure in a thickness direction (z-direction) of the negative electrode 10 for a lithium secondary battery according to the present disclosure.

The negative electrode 10 for a lithium secondary battery according to the present disclosure will be described in detail for each component with reference to FIGS. 1 and 2.

The negative electrode 10 includes a negative electrode active layer 12 comprising a carbon-based negative electrode active material on at least one side of a negative electrode current collector 11. The negative electrode active layer 12 is a layer that implements electrical activity of the negative electrode, and is manufactured by applying a negative electrode slurry comprising a negative electrode active material that implements an electrochemical oxidation-reduction reaction during charging and discharging of a battery on at least one side of the negative electrode current collector 11, and then drying and rolling the same.

FIG. 2 shows the negative electrode 10 when the negative electrode active layer 12 is formed on one surface of the negative electrode current collector 11, but is not limited thereto, and the negative electrode active layer 12 may be formed on both surfaces of the negative electrode current collector 11.

In addition, the negative electrode active layer 12 includes a carbon-based negative electrode active material as a main component as a negative electrode active material exhibiting electrochemical activity. Here, the negative electrode active material may include the carbon-based negative electrode active material as a main component. Specifically, the carbon-based negative electrode active material may be included in an amount of 80 parts by weight to 99.8 parts by weight based on 100 parts by weight of the entire negative electrode active layer, and specifically, may be included in an amount of 95 parts by weight or more, 98 parts by weight or more, 84 parts by weight to 99.8 parts by weight, 90 parts by weight to 99.8 parts by weight, 94 parts by weight to 99.8 parts by weight, 88 parts by weight to 96 parts by weight, or 92 parts by weight to 97.5 parts by weight.

The carbon-based negative electrode active material means a material having carbon atoms as a main component, and such a carbon-based negative electrode active material may include a graphite-based compound. For example, the carbon-based negative electrode active material may include natural graphite, artificial graphite, Kish graphite, pyrolytic carbon, carbon microbeads, mesophase fired carbon made from tar or pitch as a raw material (bulk mesophase, liquid crystal pitch-based carbon fiber, etc.), graphitized cokes (raw coke, green coke, pitch coke, needle coke, petroleum coke, coal coke, etc.), and the like.

The carbon-based negative electrode active material may have a form of an assembly in which a plurality of particles are assembled. In this case, one graphite assembly may be formed by aggregating 2 to 100, preferably 3 to 20 graphite.

In addition, the carbon-based negative electrode active material may satisfy an average particle diameter in a predetermined range. Specifically, the carbon-based negative electrode active material may exhibit an average particle diameter (D$_{50}$) in a range of 0.5 μm to 20 μm. For example, the carbon-based negative electrode active material may exhibit an average particle diameter (D$_{50}$) in ranges of 0.5 μm to 15 μm; 0.5 μm to 10 μm; 5 μm to 20 μm; 10 μm to 20 μm; 12 μm to 18 μm; 2 μm to 7 μm; 0.5 μm to 5 μm; or 1 μm to 3 μm.

It may be advantageous to make the particle diameter of the carbon-based negative electrode active material smaller in order to maximize a degree of disorder in an expansion direction for each particle so as to prevent expansion of particles due to charging of lithium ions. However, when the particle diameter of the carbon-based negative electrode active material is less than 0.5 $\mu$m, a large amount of binder may be required due to an increase in the number of particles per unit volume. On the other hand, when the maximum particle diameter exceeds 20 $\mu$m, expansion becomes severe, and as charging and discharging are repeated, the binding property between particles and the binding property between particles and the current collector deteriorate, so cycle characteristics may be greatly reduced.

The negative electrode active layer 12 comprising the carbon-based negative electrode active material may have a structure in which alignment and/or orientation of the carbon-based negative electrode active material is controlled for each region.

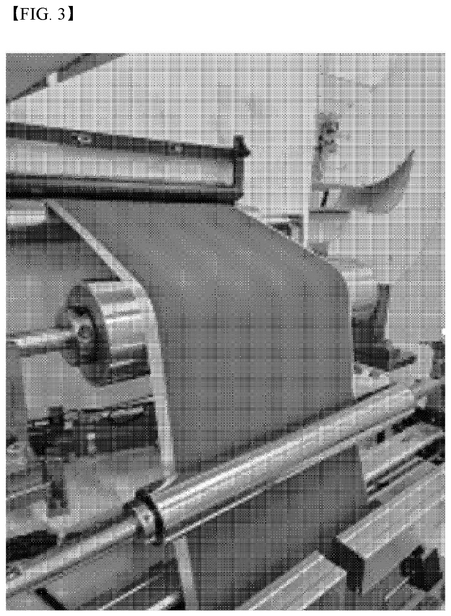

Specifically, the surface of the negative electrode active layer 12 includes a first region and a second region, and the first region and the second region may have a form in which they are alternately disposed one or more times. This form can be confirmed when the negative electrode active layer 12 is visually observed, and in some cases, when analyzing a cross-section in a thickness direction (i.e., z-direction) of the negative electrode active layer, it can be confirmed from a form in which a first region 12a and a second region 12b are alternately disposed one or more times in a width direction of the cross-section. Here, alignment and/or orientation of the carbon-based negative electrode active material included in each of the first region 12a and the second region 12b may be controlled differently. Accordingly, when the surface of the negative electrode active layer 12 is visually observed, it appears black including the carbon-based negative electrode active material, and as shown in FIG. 3, a predetermined brightness difference between the first region 12a and the second region 12b can be confirmed.

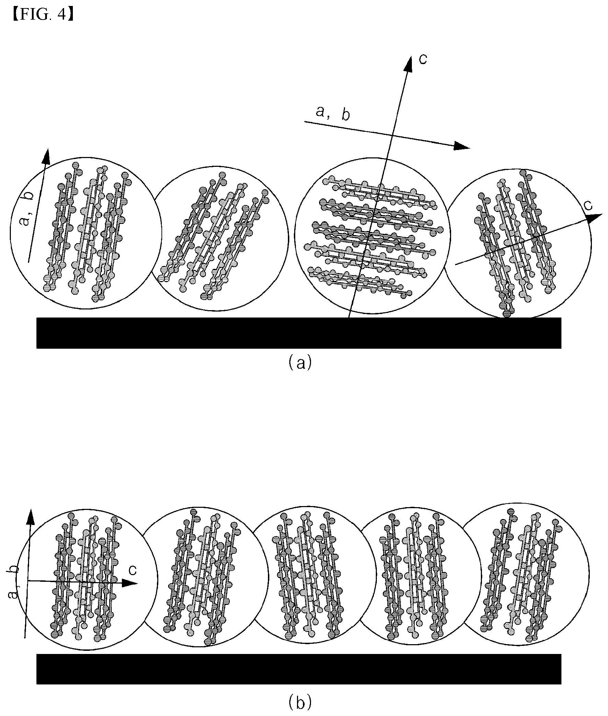

The carbon-based negative electrode active material, specifically graphite, has a particle form in which crystal surfaces (i.e., a-b axis crystal surfaces of graphite) showing a two-dimensional planar structure composed of carbon atoms are stacked in a c-axis direction. If a separate treatment for aligning and/or orienting a-b axis crystal surfaces of graphite is not performed during formation of a negative electrode active layer comprising such graphite, graphite is included in a state in which the a-b axis crystal surfaces are not aligned and/or oriented as shown in (a) of FIG. 4. In this case, the negative electrode active layer is confirmed as black, which is a color unique to graphite, when the surface is visually observed, and since the reflectance of light incident on the surface is high, L* according to a CIE LAB color difference meter exhibits a large value exceeding 46.

However, the negative electrode of the present disclosure includes graphite as a carbon-based negative electrode active material in the negative electrode active layer 12, and as shown in (b) of FIG. 4, a-b axis crystal surfaces of graphite may be aligned and/or oriented to have a predetermined angle with respect to the negative electrode current collector 11 for each region of the negative electrode active layer 12. In this case, the larger the angle at which the a-b axis crystal surfaces of the graphite are aligned and/or oriented with respect to the negative electrode current collector 11 (for example, the closer to 90°), the more an absorption rate of light incident on a surface of the negative electrode active layer 12 increases. This increase in absorption rate of incident light serves to lower L* according to a CIE LAB color difference meter of the negative electrode active layer 12.

Therefore, the negative electrode active layer of the negative electrode according to the present disclosure may have a structure in which graphite included in the first region 12a and the second region 12b is aligned and/or oriented, but the degree thereof is different for each region to induce a deviation in absorption rate of incident light for each region of the negative electrode active layer 12.

Specifically, in the negative electrode active layer 12 according to the present disclosure, a degree to which a-b axis crystal surfaces of graphite included in the first region 12a are aligned and/or oriented with respect to the negative electrode current collector 11 may be greater than that of graphite included in the second region 12b. Accordingly, the first region 12a may have an average L* value according to a CIE LAB color difference meter smaller than an average L* value of the second region 12b according to a CIE LAB color difference meter.

As an example, the first region 12a and the second region 12b may have predetermined L* values indicating black when measuring a CIE LAB color difference meter for each region, and may have a predetermined L* deviation ($\Delta$L*) between regions.

Specifically, an average L1* value of the first region 12a and an average L2* value of the second region 12b may each be in a range of 35 to 48, and the average L1* value may be smaller than the average L2* value. More specifically, the first region 12a may exhibit an average L1* value in ranges of 37 to 48; 40 to 48; 42 to 47; 44 to 47; 44 to 46; 42 to 45; 45 to 48; or 43 to 47.5 when measuring color coordinates according to a CIE LAB color difference meter. In addition, the second region 12b may exhibit an average L1* value in ranges of 36 to 48; 40 to 48; 42 to 47; 44 to 47; 44 to 46; 42 to 45; 45 to 48; or 43 to 47.5 when measuring color coordinates according to a CIE LAB color difference meter, and this may be greater than the average L1* value of the first region.

In addition, an L* value (L1*) of the first region 12a and an L* value (L2*) of the second region 12b may have a deviation ($\Delta$L*) of 0.45 or more. Specifically, the first region 12a and the second region 12b may have an L* deviation ($\Delta$L*) in ranges of 0.3 to 4; 0.3 to 3; 0.3 to 2; 0.5 to 2; 0.5 to 1.8; 0.5 to 1.4; 0.6 to 1.4; 0.7 to 1.3; 1 to 1.5; or 0.6 to 2. In this case, the first region 12a may have a lower L* value than the second region 12b and thus lower brightness, and accordingly, black of the first region 12a may appear darker than black of the second region 12b.

The present disclosure can further improve adhesion between the negative electrode active layer 12 and the negative electrode current collector 11 by adjusting the average L* and L* deviation (ΔL*) between the first region 12a and the second region of the negative electrode active layer 12 to the above-described range, and can effectively suppress a swelling phenomenon while increasing a charging speed during charging of a lithium secondary battery. Specifically, when the average L* of the first region 12a and the second region 12b exceeds the upper limit value of the above-described range, not only is the charging speed significantly low during charging of a lithium secondary battery, but also swelling of the negative electrode may occur rapidly. In addition, when the average L* of the first region 12a and the second region 12b is less than the lower limit value of the above-described range, adhesion between the negative electrode active layer 12 and the negative electrode current collector 11 may deteriorate.

In addition, when a deviation (ΔL*) between the average L* of the first region 12a and the average L* of the second region 12b exceeds the upper limit value of the above-described range, an effect of increasing the charging speed during charging of a lithium secondary battery may be insignificant. In addition, when the average L* deviation (ΔL*) between the first region 12a and the second region 12b is less than the lower limit value of the above-described range, there is a limitation in that interface properties between the negative electrode active layer 12 and the negative electrode current collector 11 deteriorate, thereby lowering electrical performance and lifespan characteristics.

As described above, the negative electrode active layer 12 according to the present disclosure may have a technical feature of including a carbon-based negative electrode active material in which a-b axis crystal surfaces are aligned and/or oriented to form a predetermined angle with respect to the negative electrode current collector 11, but the degree thereof is differently controlled for each region.

When a-b axis crystal surfaces of the carbon-based negative electrode active material included in the negative electrode active layer are aligned and/or oriented at an angle close to 90° based on a surface of the negative electrode current collector, there is a limitation in that adhesion between the negative electrode active layer and the negative electrode current collector is low because a contact area between the negative electrode active material included in the negative electrode active layer and the negative electrode current collector is significantly reduced. However, the present disclosure can significantly increase adhesion between the negative electrode active layer 12 and the negative electrode current collector 11 while improving a charging speed and a swelling phenomenon during charging of a lithium secondary battery by differently controlling alignment and/or orientation of the carbon-based negative electrode active material with respect to a surface of the negative electrode current collector 11 for each region constituting the negative electrode active layer 12.

Furthermore, the negative electrode active layer 12 may form a pattern on a surface by having a predetermined deviation between an average L1* value of the first region 12a and an average L2* value of the second region 12b. The first region 12a and the second region 12b may be distinguished to the extent that a boundary between regions can be visually observed due to an L* difference, and the boundary between regions may be implemented repeatedly and/or regularly to form a pattern. At this time, the pattern formed on the surface of the negative electrode active layer 12 may include any one or more patterns selected from a stripe pattern, a concentric circle pattern, a check pattern, and a dot pattern. Such a pattern structure of the negative electrode active layer has an advantage of being able to more intuitively distinguish between the first region and the second region.

In addition, as shown in FIG. 1, the negative electrode may have a rectangular shape in which the negative electrode active layer has a first side to a fourth side sequentially connected when observed from a surface, and may have a structure in which a negative electrode tab 13 is drawn out and formed on the first side.

At this time, the first region 12a and the second region 12b of the surface of the negative electrode active layer may have a form in which they are alternately disposed one or more times between the first side and a third side facing the first side, or the first region 12a and the second region 12b of the surface of the negative electrode active layer may have a form in which they are alternately disposed one or more times between a second side and a fourth side adjacent to the first side.

For example, the first region 12a and the second region 12b of the surface of the negative electrode active layer may have a form in which they are alternately disposed one or more times between the first side and the third side. In this case, a deviation (ΔL*) of average L* that the first region 12a and the second region 12b have may have a tendency to increase as they are closer to the negative electrode tab 13.

In a conventional negative electrode active layer, a region adjacent to a negative electrode tab exhibits a high oxidation-reduction reaction rate compared to other regions due to smooth movement of electrons and lithium ions during charging and discharging of a lithium secondary battery. This phenomenon promotes deterioration of a region adjacent to the negative electrode tab, thereby causing a decrease in capacity of the region, and accordingly, there is a problem that lithium plating is induced at an end of the negative electrode active layer adjacent to the negative electrode tab. However, the present disclosure can improve this by increasing an L* deviation of the first region 12a and the second region 12b constituting the negative electrode active layer 12 as they are closer to the negative electrode tab 13.

Specifically, as described above, a low L* value means that a-b axis crystal surfaces of the carbon-based negative electrode active material are aligned and/or oriented at a high angle with respect to the negative electrode current collector. This can improve diffusion performance of lithium ions during charging of a lithium secondary battery. Therefore, deterioration of a region of the negative electrode active layer adjacent to the negative electrode tab, which is induced as charging and discharging of a lithium secondary battery proceed, can be improved, so an effect of suppressing lithium plating can be implemented. At this time, a tendency to increase a deviation ($\Delta$L*) between the average L* of the first region 12a and the average L* of the second region 12b may exhibit an increase of about 0.1 to 0.5.

Meanwhile, the first region 12a and the second region 12b may have a predetermined length ratio with respect to an entire length in a width direction (i.e., y-axis direction) of the negative electrode active layer 12. Since the first region 12a and the second region 12b align and/or orient a-b axis crystal surfaces of the carbon-based negative electrode active material but differ in degree, a length ratio thereof may affect performance of the negative electrode active layer. Accordingly, in the present disclosure, the length ratio of the first region 12a and the second region in a width direction (y-axis direction) of the negative electrode active layer may be adjusted to satisfy a predetermined range.

Specifically, a ratio (D2:D1) of an average width (D2) of the second region to an average width (D1) of the first region may satisfy a range of 0.4:1 to 1:1. More specifically, a ratio (D2:D1) of an average width (D2) of the second region to an average width (D1) of the first region may satisfy ranges of 0.6:1 to 1:1, 0.8:1 to 1:1, 0.9:1 to 1:1, 0.6:1 to 0.8:1, 0.7:1 to 0.9:1, or 0.6:1 to 0.75:1.

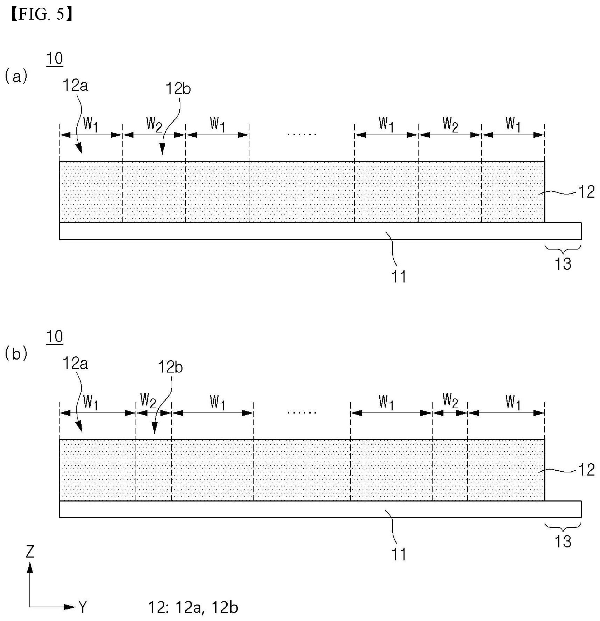

For example, as shown in (a) of FIG. 5, the first region 12a and the second region 12b may have the same length ratio in a width direction (i.e., y-axis direction) of the negative electrode active layer 12 (i.e., $W_1 = W_2$, D1:D2 = 1:1). In this case, the negative electrode active layer 12 can significantly improve lifespan characteristics of the negative electrode by effectively lowering interface resistance with the negative electrode current collector 11 while suppressing a swelling phenomenon during charging of a lithium secondary battery.

In addition, as shown in (b) of FIG. 5, the first region 12a may have a length ratio in a width direction (i.e., y-axis direction) of the negative electrode active layer 12 longer than a length ratio of the second region 12b (i.e., $W_1 > W_2$, D1:D2 = 1:0.40 to 0.99). In this case, the negative electrode active layer 12 has an advantage of being able to significantly increase a charging speed during charging of a lithium secondary battery and simultaneously maintain adhesion with the negative electrode current collector firmly.

Meanwhile, the negative electrode active layer may selectively further include a silicon-based negative electrode active material, a conductive material, a binder, other additives, etc., together with the carbon-based negative electrode active material, which is a main component, as needed.

The silicon-based negative electrode active material is a material containing silicon (Si) as a main component, and can increase a charge/discharge capacity of the negative electrode. Examples of such a silicon-based negative electrode active material include silicon (Si), silicon carbide (SiC), silicon monoxide (SiO), silicon dioxide ($SiO_2$), and the like, and these may be included alone or in combination in the negative electrode active layer. When silicon monoxide (SiO) and silicon dioxide ($SiO_2$) are uniformly mixed or composited as the silicon-based negative electrode active material and included in the negative electrode active layer, they may be expressed as silicon oxide ($SiO_q$, where $0.8 \leq q \leq 2.5$).

The silicon-based negative electrode active material may be doped or alloyed with Li, Mg, Al, Ca, Ti, etc. In addition, when the silicon-based negative electrode active material contains an oxygen element (O), it may be surface-treated with a carbon coating layer or the like on a surface for the purpose of suppressing volume expansion during charging and simultaneously improving electrical conductivity of the negative electrode active material.

The silicon-based negative electrode active material may be included in an amount of 0.1 wt.% to 40 wt.% based on the total weight of the negative electrode active layer. Specifically, the silicon-based negative electrode active material may be included in an amount of 0.5 wt.% to 20 wt.%, 1 wt.% to 9 wt.%, 5 wt.% to 15 wt.%, 3 wt.% to 7 wt.%, 11 wt.% to 19 wt.%, 13 wt.% to 17 wt.%, 15 wt.% to 20 wt.%, 10 wt.% to 30 wt.%, 20 wt.% to 40 wt.%, 25 wt.% to 35 wt.%, 15 wt.% to 25 wt.%, or 9 wt.% to 22 wt.% based on the total weight of the negative electrode active layer. The present disclosure can improve charge capacity per unit mass while reducing lithium consumption and irreversible capacity loss during initial charge/discharge of a secondary battery by adjusting a content ratio of the silicon-based negative electrode active material to the above-described range. In addition, since structural stability of the negative electrode active layer can be improved by minimizing a volume change of the negative electrode active layer during charge/discharge of a secondary battery, a lifespan of the secondary battery can be increased.

The conductive material may include one or more of carbon black, acetylene black, Ketjen black, carbon nanotubes, carbon fibers, etc., but is not limited thereto.

For example, the negative electrode active layer may contain carbon black, carbon nanotubes, carbon fibers, etc. alone or in combination as a conductive material.

The content of the conductive material may be 0.1 parts by weight to 10 parts by weight based on 100 parts by weight of the negative electrode active layer. Specifically, the conductive material may be 0.1 parts by weight to 8 parts by weight, 0.1 parts by weight to 5 parts by weight, 0.1 parts by weight to 3 parts by weight, 2 parts by weight to 6 parts by weight, or 0.5 parts by weight to 2 parts by weight. The present disclosure can prevent a charge capacity from decreasing due to an increase in resistance of the negative electrode due to a low content of conductive material by controlling the content of conductive material to the above-described range. In addition, the present disclosure can prevent a problem that a charge capacity decreases due to a decrease in the content of negative electrode active material due to an excessive amount of conductive material exceeding the above-described range, or an electrical resistance increases due to an increase in a loading amount of the negative electrode active layer.

In addition, the binder is a component that assists in bonding of the negative electrode active material, the conductive material, etc. and bonding to the current collector, and may be appropriately applied within a range that does not deteriorate electrical properties of the negative electrode. For example, the binder may include polyvinylidene fluoride-hexafluoropropylene copolymer (PVDF-co-HFP), polyvinylidene fluoride (PVdF), polyacrylonitrile, polymethylmethacrylate, polyvinyl alcohol, carboxymethylcellulose (CMC), starch, hydroxypropylcellulose, regenerated cellulose, polyvinyl pyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorine rubber, or any one or more thereof.

The content of the binder may be 0.1 parts by weight to 10 parts by weight based on 100 parts by weight of the negative electrode active layer. Specifically, the binder may be 0.1 parts by weight to 8 parts by weight, 0.1 parts by weight to 5 parts by weight, 0.1 parts by weight to 3 parts by weight, or 2 parts by weight to 6 parts by weight. The present disclosure can prevent adhesion of an active layer from decreasing due to a low content of binder or electrical properties of the negative electrode from decreasing due to an excessive amount of binder by controlling the content of binder included in the negative electrode active layer to the above-described range.

In addition, the negative electrode current collector is not particularly limited as long as it has high conductivity without causing chemical changes in the battery. For example, the negative electrode current collector may be copper, stainless steel, nickel, titanium, fired carbon, etc. When the negative electrode current collector is made of copper or stainless steel, it may also be surface-treated with carbon, nickel, titanium, silver, etc. An average thickness of the negative electrode current collector may be appropriately applied in a range of 1 $\mu$m to 500 $\mu$m in consideration of conductivity and total thickness of the negative electrode to be manufactured.

The negative electrode for a lithium secondary battery according to the present disclosure has excellent adhesion between the negative electrode current collector and the negative electrode active layer by having the above-described configuration. In addition, the negative electrode has advantages of not only improved swelling phenomenon during charging but also excellent rapid charging performance.

**Lithium Secondary Battery**

In addition, the present disclosure provides a lithium secondary battery comprising:

an electrode assembly comprising a positive electrode, the negative electrode of the present disclosure described above, and a separator disposed between the positive electrode and the negative electrode.

The lithium secondary battery according to the present disclosure includes an electrode assembly having a structure in which a plurality of positive electrodes and a plurality of negative electrodes are alternately disposed and a separator is positioned between them. The lithium secondary battery includes the negative electrode of the present disclosure described above, and thus can not only minimize an increase in electrical resistance due to high loading/high density by improving lithium-ion diffusion ability, but also has advantages of excellent lifespan characteristics and safety while implementing high output characteristics.

At this time, since the negative electrode has the same configuration as the above-described configuration, a detailed description thereof will be omitted.

In addition, the positive electrode includes a positive electrode active layer comprising a positive electrode active material on a positive electrode current collector. The positive electrode active layer may optionally further include a conductive material, a binder, other additives, etc. as needed.

The positive electrode active material is a material that can cause an electrochemical reaction on the positive electrode current collector, and may include one or more lithium metal oxides represented by Chemical Formula 1 and Chemical Formula 2 below, which are capable of reversible intercalation and deintercalation of lithium ions:

[Chemical Formula 1]    $Li_1[Ni_mCo_nMn_wM^1_v]O_2$

[Chemical Formula 2]    $LiM^2_pMn_qP_rO_4$

In the above Chemical Formula 1 and Chemical Formula 2,

wherein $M^1$ is one or more elements selected from W, Cu, Fe, V, Cr, Ti, Zr, Zn, Al, In, Ta, Y, La, Sr, Ga, Sc, Gd, Sm, Ca, Ce, Nb, Mg, B, and Mo,

l, m, n, w, and v are $1.0 \leq l \leq 1.30$, $0.5 \leq m < 1$, $0 < n \leq 0.3$, $0 < w \leq 0.3$, $0 \leq v \leq 0.1$, respectively, where $m + n + w + v = 1$,

wherein $M^2$ is Ni, Co, or Fe,

wherein p is $0.05 < p \leq 1.0$,

wherein q is 2-p, and

wherein r is 0 or 1.

The lithium metal oxides represented by the above Chemical Formula 1 and Chemical Formula 2 are materials containing nickel (Ni) and manganese (Mn) in high content, respectively, and when used as a positive electrode active material, have an advantage of being able to stably supply high capacity and/or high voltage electricity compared to positive electrode active materials such as lithium iron phosphate ($LiFeO_4$) conventionally used.

At this time, the lithium metal oxide represented by Chemical Formula 1 may include $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, etc., and the lithium metal oxide represented by Chemical Formula 2 may include $LiNi_{0.7}Mn_{1.3}O_4$; $LiNi_{0.5}Mn_{1.5}O_4$; $LiNi_{0.3}Mn_{1.7}O_4$, etc., and these may be used alone or in combination.

In addition, the positive electrode active material may be included in an amount of 85 parts by weight or more based on 100 parts by weight of the entire positive electrode active layer. Specifically, the positive electrode active material may be included in an amount of 90 parts by weight or more, 93 parts by weight or more, or 95 parts by weight or more based on 100 parts by weight of the entire positive electrode active layer.

The conductive material is used to improve electrical performance of the positive electrode, and may be one conventionally used in the art. Specifically, the conductive material may include one or more of natural graphite, artificial graphite, carbon black, acetylene black, Denka black, Ketjen black, Super-P, channel black, furnace black, lamp black, thermal black, graphene, and carbon nanotubes.

In addition, the conductive material may be included in an amount of 0.1 parts by weight to 5 parts by weight based on 100 parts by weight of the positive electrode active layer. Specifically, the conductive material may be included in an amount of 0.1 parts by weight to 4 parts by weight; 2 parts by weight to 4 parts by weight; 1.5 parts by weight to 5 parts by weight; 1 part by weight to 3 parts by weight; 0.1 parts by weight to 2 parts by weight; or 0.1 parts by weight to 1 part by weight based on 100 parts by weight of each positive electrode active layer.

The binder performs a role of binding the positive electrode active material, positive electrode additive, and conductive material to each other, and may be used without particular limitation as long as it has such a function. Specifically, the binder may include one or more resins selected from the group consisting of polyvinylidene fluoride-hexafluoropropylene copolymer (PVdF-co-HFP), polyvinylidene fluoride (PVdF), polyacrylonitrile, polymethylmethacrylate, and copolymers thereof. For example, the binder may include polyvinylidene fluoride.

In addition, the binder may be included in an amount of 1 part by weight to 10 parts by weight based on 100 parts by weight of the positive electrode active layer. Specifically, the binder may be included in an amount of 2 parts by weight to 8 parts by weight; or 1 part by weight to 5 parts by weight based on 100 parts by weight of the positive electrode active layer.

A total thickness of the positive electrode active layer is not particularly limited, but specifically, may be 50 $\mu$m to 300 $\mu$m, and more specifically, may be in ranges of 100 $\mu$m to 200 $\mu$m; 80 $\mu$m to 150 $\mu$m; 120 $\mu$m to 170 $\mu$m; 150 $\mu$m to 300 $\mu$m; 200 $\mu$m to 300 $\mu$m; or 150 $\mu$m to 190 $\mu$m.

As a positive electrode current collector, one having high conductivity without causing chemical changes in the battery may be used. For example, stainless steel, aluminum, nickel, titanium, fired carbon, etc. may be used, and in the case of aluminum or stainless steel, one surface-treated with carbon, nickel, titanium, silver, etc. may also be used. In addition, an average thickness of the current collector may be appropriately applied in a range of 3 $\mu$m to 500 $\mu$m in consideration of conductivity and total thickness of the positive electrode to be manufactured.

The separator is an insulating thin film having high ion permeability and mechanical strength, and is not particularly limited as long as it is conventionally used in the art. Specifically, a separator including one or more polymers selected from chemical resistance and hydrophobic polypropylene; polyethylene; polyethylene-propylene copolymer may be used. The separator may have a form of a porous polymer substrate such as a sheet or nonwoven fabric comprising the above-described polymer. In some cases, it may also have a form of a composite separator in which organic or inorganic particles are coated on the porous polymer substrate by an organic binder. In addition, the separator may have an average diameter of pores of 0.01 $\mu$m to 10 $\mu$m, and an average thickness of 5 $\mu$m to 300 $\mu$m.

Meanwhile, the lithium secondary battery according to the present disclosure is not particularly limited, but may be a secondary battery that can include a stack-type; zigzag-type; or zigzag-stack-type electrode assembly. For example, the lithium secondary battery according to the present disclosure may be a pouch-type secondary battery or a prismatic secondary battery.

A pouch-type secondary battery and/or a prismatic secondary battery have an advantage of having high utilization in terms of energy density because unit cells of a secondary battery can be packed at high density in a limited space.

## Method of Manufacturing Negative Electrode for Lithium Secondary Battery

Furthermore, the present disclosure provides a method of manufacturing a negative electrode for a lithium secondary battery according to the present disclosure described above.

Specifically, the method of manufacturing a negative electrode for a lithium secondary battery according to the present disclosure includes applying a negative electrode slurry comprising a carbon-based negative electrode active material on at least one side of a negative electrode current collector (S1), applying a magnetic field to the applied negative electrode slurry (S2), and drying the negative electrode slurry to which the magnetic field has been applied to form a negative electrode active layer (S3).

At this time, the step (S1) refers to a process of discharging and coating a negative electrode slurry comprising a carbon-based negative electrode active material on at least one side of a moving negative electrode current collector.

This step (S1) may be applied without particular limitation as long as it is a method conventionally applied in the art, but preferably, a die coating method may be used. The die coating method may be performed through a slot die having a shim for controlling discharge conditions of the negative electrode slurry. The slot die can easily control a loading amount, a coating thickness, etc. of the negative electrode slurry applied on the negative electrode current collector by controlling a shape, position, etc. of the shim.

The negative electrode slurry includes a carbon-based negative electrode active material as a main component and may further include a conductive material and a binder. Since each component included in the negative electrode slurry is the same as the negative electrode active layer of the negative electrode for a lithium secondary battery described above, a detailed description thereof will be omitted.

In addition, the negative electrode slurry may have a predetermined viscosity at room temperature.

"Viscosity" means a size of physical and/or chemical interactions such as friction and resistance between each raw material (e.g., carbon-based negative electrode active material, additive, etc.) present inside the negative electrode slurry. Such interaction increases as a concentration of raw materials increases even if a number of moles and/or weight of raw materials is the same. A negative electrode slurry having high viscosity has a limitation in that orientation of the carbon-based negative electrode active material included therein is lowered when a magnetic field is applied, so that it is difficult to implement a high inclination with respect to the negative electrode current collector. Therefore, a viscosity at room temperature can be adjusted so that a-b axis crystal surfaces of the carbon-based negative electrode active material are easily aligned and/or oriented with respect to the negative electrode current collector.

Specifically, the negative electrode slurry may have a viscosity of less than 10,000 cps at room temperature (22 ± 3°C). Specifically, a viscosity of the negative electrode slurry may be in ranges of 1,000 cps to 9,000 cps; 3,000 cps to 8,000 cps; 3,000 cps to 7,000 cps; 5,000 cps to 7,000 cps; 4,000 cps to 6,500 cps; 5,000 cps to 6,500 cps; 3,000 cps to 5,500 cps; 5,500 cps to 6,500 cps; or 4,000 cps to 6,500 cps at room temperature (22 ± 3°C).

Next, the step (S2) refers to a process of aligning and/or orienting a-b axis crystal surfaces of the carbon-based negative electrode active material included in the negative electrode slurry by applying a magnetic field to the negative electrode slurry.

At this time, a degree to which a-b axis crystal surfaces of the carbon-based negative electrode active material included in the negative electrode slurry are aligned and/or oriented may vary depending on the intensity of the applied magnetic field. Therefore, in order to implement a first region and a second region of a negative electrode active layer in which degrees to which a-b axis crystal surfaces of the carbon-based negative electrode active material are aligned and/or oriented with respect to the negative electrode current collector are different, magnetic field conditions applied to regions of the negative electrode slurry corresponding to the first region and the second region can be differently adjusted.

Specifically, in this step (S2), region A of the negative electrode slurry corresponding to the first region of the negative electrode active layer and region B of the negative electrode slurry corresponding to the second region of the negative electrode active layer may be set on a surface of the negative electrode slurry applied to the negative electrode current collector. Thereafter, it may be performed by applying a magnetic field to the set region A of the negative electrode slurry, and not applying a magnetic field to region B of the negative electrode slurry or applying a weaker magnetic field than the magnetic field applied to region A.

Here, the magnetic field applied to region A of the negative electrode slurry may have an intensity of 1,000 G to 9,000 G (Gauss) in order to enhance the effect of aligning and/or orienting a-b axis crystal surfaces of the carbon-based negative electrode active material. Specifically, the magnetic field applied to region A of the negative electrode slurry may be applied at intensities in ranges of 1,000 G to 8,000 G; 2,000 G to 8,000 G; 3,000 G to 8,000 G; 5,000 G to 9,000 G; 5,000 G to 7,500 G; 5,500 G to 6,500 G; 1,000 G to 7,000 G; 2,000 G to 6,000 G; 1,500 G to 5,000 G; 1,500 G to 4,500 G; 4,000 G to 8,000 G; 4,500 G to 7,000 G; 3,000 G to 6,500 G; or 3,500 G to 6,500 G.

In addition, when a magnetic field is applied to region B of the negative electrode slurry, the magnetic field applied to region B of the negative electrode slurry may be applied at intensities of 5,000 G or less, 4,500 G or less, or in ranges of 500 G to 5,000 G, 1,000 G to 4,500 G, 1,500 G to 4,500 G, 1,500 G to 3,000 G, 3,000 G to 5,000 G, 2,000 G to 4,000 G, or 3,600 G to 4,300 G.

At this time, a magnetic field may be applied to region B of the negative electrode slurry at an intensity of 0.1% to 0.9% of an intensity of the magnetic field applied to region A. Specifically, the magnetic field applied to region B of the negative electrode slurry may be applied at intensities in ranges of 0.1% to 0.7%; 0.1% to 0.5%; 0.1% to 0.3%; 0.5% to 0.9%; 0.7% to 0.9%; 0.3% to 0.5%; or 0.4% to 0.6% of an intensity of the magnetic field applied to region A.

The present disclosure can implement an effective L* deviation according to a CIE Lab color difference meter in the first region and the second region of the negative electrode active layer by adjusting intensities of magnetic fields applied to region A and region B of the negative electrode slurry as described above.

Meanwhile, this step (S2) may be performed by installing a magnet on a path along which the negative electrode slurry applied on the negative electrode current collector moves to apply a magnetic field to the negative electrode slurry. At this time, the magnet may be disposed at a lower portion (i.e., a lower portion of the negative electrode current collector) of the negative electrode slurry applied on the negative electrode current collector. When the magnet is disposed at both an upper portion and a lower portion of the negative electrode slurry, a-b axis crystal surfaces of the carbon-based negative electrode active material included in the negative electrode slurry can be aligned and/or oriented at an angle close to 90° with respect to the negative electrode current collector. However, in this case, since a magnetic field is uniformly applied to an entire surface of the negative electrode slurry, it is difficult to induce a deviation in alignment and/or orientation of the carbon-based negative electrode active material for each region even if the intensity of the magnetic field is adjusted differently for each region. Therefore, it is preferable that a magnet for applying a magnetic field is positioned on a path along which the negative electrode slurry moves and is disposed at a lower portion of the negative electrode slurry.

In addition, when a magnetic field is applied to region A of the negative electrode slurry and a magnetic field is not applied to region B, i) a magnet may be disposed only at a point corresponding to region A of the negative electrode slurry, or ii) one magnet may be disposed in a width direction (same direction as a width direction (y-axis direction) of the negative electrode active layer) of the negative electrode slurry, but a magnetic field may be blocked by introducing a magnetic field shielding member or the like at a point corresponding to region B.

Furthermore, when a magnetic field is applied to both region A and region B of the negative electrode slurry, i) a unit magnet may be disposed in each region and an intensity of the magnetic field of the unit magnet may be adjusted, or ii) one magnet may be disposed in a width direction (same direction as a width direction (y-axis direction) of the negative electrode active layer) of the negative electrode slurry, but an intensity of a magnetic field implemented for each region may be adjusted by adjusting a thickness, length, shape, etc. of the magnet.

Next, the step (S3) refers to a process of forming a negative electrode active layer by drying the negative electrode slurry to which the magnetic field has been applied.

The drying may be applied without particular limitation as long as it is a method that can be conventionally applied in the art. For example, the drying may be performed by applying thermal energy to the negative electrode slurry using a hot air dryer, a vacuum oven, or the like to dry the negative electrode slurry.

Meanwhile, the method of manufacturing a negative electrode according to the present disclosure may further include a process of rolling the negative electrode active layer formed by drying. The rolling refers to a process of increasing the density of the entire negative electrode active layer by applying pressure to the surface of the negative electrode active layer formed using a roll press or the like. To this end, the rolling may be performed under predetermined pressure and speed conditions at a temperature higher than room temperature.

Specifically, the rolling may be performed at a temperature in a range of 20°C to 100°C. More specifically, the rolling may be performed at temperatures in ranges of 20°C to 80°C; 20°C to 60°C; 20°C to 40°C; 20°C to 30°C; 30°C to 100°C; 40°C to 100°C; 60°C to 100°C; 75°C to 100°C; 85°C to 100°C; 50°C to 90°C; 60°C to 80°C; or 65°C to 90°C.

In addition, the rolling may be performed at a rolling speed in a range of 2 m/s to 7 m/s. More specifically, the rolling may be performed at rolling speeds in ranges of 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s.

In addition, the rolling may be performed under a pressure condition in a range of 50 MPa to 200 MPa, and specifically, may be performed under pressure conditions in ranges of 50 MPa to 150 MPa; 50 MPa to 100 MPa; 100 MPa to 200 MPa; 150 MPa to 200 MPa; or 80 MPa to 140 MPa.

The present disclosure can maximize energy density of a negative electrode active layer formed while minimizing damage to the negative electrode active layer by performing rolling under the above-described temperature, speed, and/or pressure conditions.

Hereinafter, the present disclosure will be described in more detail by Examples and Comparative Examples.

However, the following Examples and Comparative Examples are merely illustrative of the present disclosure, and the content of the present disclosure is not limited to the following Examples and Comparative Examples.

**Examples 1 to 5 and Comparative Examples 1 to 3. Manufacture of Negative Electrode for Lithium Secondary Battery**

Natural graphite (average particle diameter ($D_{50}$): about 11 $\mu$m to 13 $\mu$m) and artificial graphite (average particle

diameter ($D_{50}$): about 15 $\mu$m to 16 $\mu$m) were prepared as a first carbon-based negative electrode active material and a second carbon-based negative electrode active material. At the same time, styrene butadiene rubber (SBR) was prepared as a binder, carboxymethylcellulose (CMC) was prepared as a thickening agent, and carbon black (Super-P) was prepared as a conductive material.

Then, as shown in Table 1 below, ① a carbon-based negative electrode active material was prepared, and a negative electrode slurry was prepared by mixing 97 wt.% of the carbon-based negative electrode active material, 1.05 wt.% of carboxymethylcellulose (CMC), 1.45 wt.% of styrene butadiene rubber (SBR), and 0.5 wt.% of carbon black with water so that a solid content was 50%. At this time, the viscosity of the prepared negative electrode slurry at room temperature (22 ± 3°C) was 5,000 ± 100 cps.

Using a die coater, the prepared negative electrode slurry was applied (S1) on a copper foil (thickness: 6 $\mu$m) being transferred by roll-to-roll (transfer speed: 6 m/min). Thereafter, a magnetic field was applied (S2) to the applied negative electrode slurry for 2 seconds to 9 seconds using a magnet.

Magnets were installed so that six regions A and four regions B were alternately disposed on a surface of the negative electrode slurry applied to the copper foil between a first side on which a negative electrode tab would be provided and a third side facing the first side. At this time, (2) a position of a magnet for applying a magnetic field; ③ a length ratio of region A and region B to an entire length of the negative electrode slurry; and ④ an intensity of a magnetic field applied to region A and region B of the negative electrode slurry were adjusted as shown in Table 1 below.

A negative electrode active layer was formed on the negative electrode current collector by drying the negative electrode slurry to which the magnetic field had been applied with hot air. The formed negative electrode active layer was rolled at 50 ± 1°C at a pressure of 100 to 150 MPa and a transfer speed of 3 m/s to manufacture a negative electrode for a lithium secondary battery (average thickness of negative electrode active layer: about 90 + 5 $\mu$m).

[Table 1]

| | ① Weight ratio in carbon-based negative electrode active material | | ② Magnet position based on negative electrode slurry | ③ Length ratio | | ④ Magnetic field intensity | |
| --- | --- | --- | --- | --- | --- | --- | --- |
| | Natural graphite | Artificial graphite | | Region A | Region B | Region A | Region B |
| Comparative Example 1 | 50 wt.% | 50 wt.% | Not installed | 10% | 10% | 0G | 0G |
| Comparative Example 2 | 50 wt.% | 50 wt.% | Upper and lower portions | 10% | 10% | 4,000G | 2,000G |
| Comparative Example 3 | 50 wt.% | 50 wt.% | Lower portion | 10% | 10% | 4,000G | 4,000G |
| Example 1 | 100 wt.% | 0 wt.% | Lower portion | 10% | 10% | 4,000G | 2,000G |
| Example 2 | 50 wt.% | 50 wt.% | Lower portion | 10% | 10% | 4,000G | 2,000G |
| Example 3 | 50 wt.% | 50 wt.% | Lower portion | 13% | 5.5% | 4,000G | 2,000G |
| Example 4 | 50 wt.% | 50 wt.% | Lower portion | 10% | 10% | 4,000G | 0G |
| Example 5 | 50 wt.% | 50 wt.% | Lower portion | 10% | 10% | 6,000G | 2,000G |

**Examples 6 to 10 and Comparative Examples 4 to 6. Manufacture of Lithium Secondary Battery**

$LiNi_{0.7}Co_{0.1}Mn_{0.1}Al_{0.1}O_2$ having a particle size of 5 $\mu$m was prepared as a positive electrode active material, and a slurry was formed by mixing with polyvinylidene fluoride as a carbon-based conductive agent and binder at a weight ratio of 94:3:3 in N-methyl pyrrolidone (NMP), cast on an aluminum foil, dried in a vacuum oven at 120°C, and then rolled to manufacture a positive electrode.

A 1 Ah-class lithium secondary battery was assembled by interposing a separator made of polypropylene of 18

μm between the obtained positive electrode and the negative electrodes respectively manufactured in Examples 1 to 5 and Comparative Examples 1 to 3, inserting them into a case, and then injecting an electrolyte composition.

At this time, types of negative electrodes applied to each lithium secondary battery are shown in Table 2 below.

[Table 2]

|  | Type of applied negative electrode |
|---|---|
| Example 6 | Negative electrode manufactured in Example 1 |
| Example 7 | Negative electrode manufactured in Example 2 |
| Example 8 | Negative electrode manufactured in Example 3 |
| Example 9 | Negative electrode manufactured in Example 4 |
| Example 10 | Negative electrode manufactured in Example 5 |
| Comparative Example 4 | Negative electrode manufactured in Comparative Example 1 |
| Comparative Example 5 | Negative electrode manufactured in Comparative Example 2 |
| Comparative Example 6 | Negative electrode manufactured in Comparative Example 3 |

**Experimental Examples**

The following experiments were performed to evaluate physical properties and performance of negative electrodes manufactured according to the present disclosure.

1) Measurement of color coordinates according to CIE LAB color difference meter

For negative electrodes manufactured in Examples 1 to 5 and Comparative Examples 1 to 3, a first region and a second region were confirmed in a width direction based on a cross-section in a thickness direction of the negative electrode active layer, and color coordinates according to a CIE LAB color difference meter were measured for three arbitrary points in each region. At this time, the color coordinates were measured using a non-contact CIE LAB color difference meter, and an average value for L* representing brightness among values at the measured three points was calculated to obtain L* of each region and a deviation ($\Delta$L*) between regions. The results are shown in Table 3 below.

2) Measurement of interface resistance ($MP_R$) between negative electrode active layer and negative electrode current collector

For negative electrodes manufactured in Examples 1 to 5 and Comparative Examples 1 to 3, interface resistance between a negative electrode active layer and a negative electrode current collector was measured. The interface resistance was measured using XF057 electrode resistance measurement equipment from Hioki Corporation at 22 $\pm$ 2°C and a relative humidity of 50 $\pm$ 5% under conditions of a measurement current of 100 μA or 1 mA; and a measurement voltage of 1 V or 10 V.

3) Measurement of tortuosity and pore resistance ($R_{pore}$) of negative electrode active layer

A symmetric coin cell in which a working electrode and a counter electrode were identically applied with negative electrodes manufactured in Examples 1 to 5 and Comparative Examples 1 to 3 were fabricated. At this time, an electrolyte in which 1.0 M $LiPF_6$ of lithium salt was mixed in an organic solvent (EC:EMC = 1:4 Vol%) was used.

Thereafter, impedance spectroscopy (frequency range from 500 KHz to 100 mHz) was performed on the fabricated symmetric electrode. After expressing results measured through the impedance spectroscopy as a Nyquist plot, tortuosity and pore resistance ($R_{pore}$) were calculated through data analysis.

In addition, a ratio ($MP_R/R_{pore}$) thereof was calculated from the previously measured interface resistance value ($MP_R$) between the negative electrode active layer and the negative electrode current collector and the pore resistance ($R_{pore}$). The results are shown in Table 3 below.

[Table 3]

| | L* | | ΔL* | Interface resistance [Ωm·cm$^2$] | Tortuosity [%] | Pore resistance [Ω] | MP$_R$/R$_{pore}$ [m$^2$] |
|---|---|---|---|---|---|---|---|
| | First region | Second region | | | | | |
| Comparative Example 1 | 49.5 | 49.9 | 0.4 | 2.725 | 5.70 | 3.27 | 0.0833 |
| Comparative Example 2 | 41.1 | 41.2 | 0.1 | 4.405 | 4.09 | 2.24 | 0.1966 |
| Example 1 | 45.0 | 45.6 | 0.6 | 2.867 | 4.24 | 3.08 | 0.0930 |
| Example 2 | 44.8 | 45.3 | 0.5 | 3.833 | 4.25 | 2.45 | 0.1564 |
| Example 3 | 44.8 | 45.3 | 0.5 | 4.011 | 4.19 | 2.38 | 0.1685 |
| Example 4 | 44.2 | 45.0 | 0.8 | 4.002 | 4.41 | 2.59 | 0.1545 |
| Example 5 | 44.1 | 44.9 | 0.8 | 3.975 | 4.29 | 2.30 | 0.1728 |

As shown in Table 3 above, it can be seen that negative electrodes according to the present disclosure have excellent interface characteristics between a negative electrode active layer and a negative electrode current collector, and excellent tortuosity and pore resistance in the negative electrode active layer.

Specifically, it was confirmed that negative electrodes manufactured in Examples implement an L* deviation of a first region and a second region distinguished in a width direction based on a cross-section in a thickness direction of a negative electrode active layer by controlling a magnetic field applied to region A and region B of a negative electrode slurry at a lower portion of a moving negative electrode slurry, thereby forming a pattern on a surface. In addition, it was confirmed that negative electrodes manufactured in Examples have a tendency to increase an L* deviation between a first region and a second region as they are closer to a negative electrode tab.

In addition, it was found that negative electrodes manufactured in Examples have low interface resistance between a negative electrode active layer and a negative electrode current collector of 4.4 Ωm·cm$^2$ or less, indicating that a contact area between the negative electrode active layer and the negative electrode current collector at an interface is high.

Furthermore, it was found that negative electrodes manufactured in Examples have not only low tortuosity of a negative electrode active layer of 5.0% or less, but also low pore resistance (R$_{pore}$) of less than 3.1 Ω.

From these results, it can be seen that a negative electrode manufactured according to the present disclosure has a pattern structure in which a first region and a second region having a predetermined deviation in L* of a CIE Lab color difference meter are alternately disposed in a width direction based on a cross-section in a thickness direction of a negative electrode active layer, thereby having excellent adhesion between a negative electrode current collector and a negative electrode active layer. In addition, the negative electrode has advantages of not only improved swelling phenomenon during charging but also excellent rapid charging performance.

While the present disclosure has been described with reference to preferred embodiments of the present disclosure, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

**Claims**

1.  A negative electrode, comprising:

    a negative electrode current collector; and a negative electrode active layer disposed on at least one side of the negative electrode current collector and comprising a carbon-based negative electrode active material,
    wherein a surface of the negative electrode active layer comprises a form in which a first region and a second region having ΔL* of 0.45 or more represented by Equation 1 based on L* according to a CIE LAB color difference meter are alternately disposed one or more times:

    [Equation 1]

    $$\Delta L^* = |L_1^* - L_2^*|$$

In Equation 1,
$L_1^*$ represents an average $L^*$ value of the first region, and
$L_2^*$ represents an average $L^*$ value of the second region.

2. The negative electrode of claim 1, wherein the average $L_1^*$ value of the first region is in a range of 35 to 48, and the average $L_2^*$ value of the second region is in a range of 36 to 50.

3. The negative electrode of claim 1, wherein the first region and the second region formed on the surface of the negative electrode active layer form any one or more patterns selected from a stripe pattern, a concentric circle pattern, a check pattern, and a dot pattern.

4. The negative electrode of claim 1, wherein the negative electrode has a rectangular shape and has a structure in which a negative electrode tab is formed on a first side of the rectangular shape, and
between the first side and a third side facing the first side, the surface of the negative electrode active layer comprises a form in which the first region and the second region are alternately disposed one or more times.

5. The negative electrode of claim 1, wherein the negative electrode has a rectangular shape and has a structure in which a negative electrode tab is formed on a first side of the rectangular shape, and
between a second side and a fourth side adjacent to the first side, the surface of the negative electrode active layer comprises a form in which the first region and the second region are alternately disposed one or more times.

6. The negative electrode of claim 1, wherein a ratio (D2:D1) of an average width (D2) of the second region to an average width (D1) of the first region is in a range of 0.4:1 to 1: 1.

7. The negative electrode of claim 1, wherein the carbon-based negative electrode active material comprises one or more selected from natural graphite, artificial graphite, Kish graphite, pyrolytic carbon, carbon microbeads, mesophase fired carbon made from tar or pitch as a raw material, and graphitized coke.

8. The negative electrode of claim 1, wherein the negative electrode active layer comprises one or more silicon-based negative electrode active materials selected from Si, SiC, and $SiO_q$ (where $0.5 \leq q \leq 2.5$).

9. The negative electrode of claim 1, wherein an interface resistance between the negative electrode current collector and the negative electrode active layer is in a range of 0.1 $m\Omega \cdot m^2$ to 8.0 $m\Omega \cdot m^2$.

10. The negative electrode of claim 1, wherein a tortuosity of the negative electrode active layer is in a range of 2.0% to 8.0%.

11. A method of manufacturing a negative electrode, comprising:

applying a negative electrode slurry comprising a carbon-based negative electrode active material on at least one side of a negative electrode current collector;
applying a magnetic field to the applied negative electrode slurry; and
drying the negative electrode slurry to which the magnetic field has been applied to form a negative electrode active layer;
wherein in the step of applying the magnetic field,
a magnetic field in an average range of 1,000 G to 9,000 G is applied to region A of the negative electrode slurry corresponding to the first region, and
a magnetic field is not applied to region B of the negative electrode slurry corresponding to the second region, or a magnetic field of 5,000 G or less is applied.

12. The method of manufacturing a negative electrode of claim 11, wherein in the step of applying the magnetic field,

when a magnetic field is applied to region B of the negative electrode slurry,
an intensity of the magnetic field applied to region B of the negative electrode slurry is in a range of 0.1% to 0.9% of an intensity of the magnetic field applied to region A of the negative electrode slurry.

13. The method of manufacturing a negative electrode of claim 11, wherein in the step of applying the magnetic field, the magnetic field is performed by a lower application method in which the magnetic field is applied from a lower portion of the negative electrode.

【FIG. 1】

10

12: 12a, 12b

【FIG. 2】

10

| 12a | 12b | 12a | ...... | 12a | 12b | 12a |

12

11

13

Z

Y

12: 12a, 12b

【FIG. 3】

【FIG. 4】

(a)

(b)

【FIG. 5】

(a) 10

12a 12b

W₁ W₂ W₁ ...... W₁ W₂ W₁

12

13

11

(b) 10

12a 12b

W₁ W₂ W₁ ...... W₁ W₂ W₁

12

13

11

Z

Y

12: 12a, 12b

## INTERNATIONAL SEARCH REPORT

International application No.

**PCT/KR2025/010158**

### A. CLASSIFICATION OF SUBJECT MATTER

**H01M 4/133**(2010.01)i; **H01M 4/587**(2010.01)i; **H01M 4/36**(2006.01)i; **H01M 4/38**(2006.01)i; **H01M 4/1393**(2010.01)i; **H01M 4/04**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/133(2010.01); H01M 10/04(2006.01); H01M 10/0525(2010.01); H01M 4/1393(2010.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬이차전지(lithium secondary battery), 음극(anode), 탄소계 음극 활물질 (carbon-based anode active material), 색차계(colorimeter), 패턴(pattern), 자기장(magnetic field)

### C. DOCUMENTS CONSIDERED TO BE RELEVANT

| Category* | Citation of document, with indication, where appropriate, of the relevant passages | Relevant to claim No. |
|---|---|---|
| X | KR 10-2018-0060778 A (SAMSUNG SDI CO., LTD.) 07 June 2018 (2018-06-07)<br>claims 1, 2, 4, 5-7, 9; paragraphs [0043], [0044], [0048]-[0058], [0060], [0061], [0066]-[0071], [0089]; figures 2, 8-10 | 1-13 |
| A | KR 10-2617498 B1 (LG ENERGY SOLUTION, LTD.) 27 December 2023 (2023-12-27)<br>abstract; claims 1-13 | 1-13 |
| A | KR 10-2544496 B1 (LG ENERGY SOLUTION, LTD.) 20 June 2023 (2023-06-20)<br>abstract; claims 1-12 | 1-13 |
| A | KR 10-2023-0130511 A (SK ON CO., LTD.) 12 September 2023 (2023-09-12)<br>abstract; claims 1-23 | 1-13 |
| A | KR 10-2024-0084705 A (LG ENERGY SOLUTION, LTD.) 14 June 2024 (2024-06-14)<br>abstract; claims 1-13 | 1-13 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 October 2025** | **21 October 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/010158**

| Patent document cited in search report | | | Publication date (day/month/year) | Patent family member(s) | | | Publication date (day/month/year) |
|---|---|---|---|---|---|---|---|
| KR | 10-2018-0060778 | A | 07 June 2018 | CN | 108123180 | A | 05 June 2018 |
| | | | | CN | 108123180 | B | 24 August 2021 |
| | | | | KR | 10-2255125 | B1 | 21 May 2021 |
| | | | | US | 11152606 | B2 | 19 October 2021 |
| | | | | US | 2018-0151867 | A1 | 31 May 2018 |
| KR | 10-2617498 | B1 | 27 December 2023 | CN | 118369786 | A | 19 July 2024 |
| | | | | EP | 4421900 | A1 | 28 August 2024 |
| | | | | EP | 4421900 | A4 | 03 September 2025 |
| | | | | JP | 2024-545453 | A | 06 December 2024 |
| | | | | US | 12322786 | B2 | 03 June 2025 |
| | | | | US | 2024-0429366 | A1 | 26 December 2024 |
| | | | | WO | 2024-080617 | A1 | 18 April 2024 |
| KR | 10-2544496 | B1 | 20 June 2023 | CN | 118541828 | A | 23 August 2024 |
| | | | | EP | 4447164 | A1 | 16 October 2024 |
| | | | | EP | 4447164 | A4 | 19 March 2025 |
| | | | | JP | 2025-503069 | A | 30 January 2025 |
| | | | | WO | 2024-136079 | A1 | 27 June 2024 |
| KR | 10-2023-0130511 | A | 12 September 2023 | CN | 116741936 | A | 12 September 2023 |
| | | | | EP | 4239703 | A2 | 06 September 2023 |
| | | | | EP | 4239703 | A3 | 20 December 2023 |
| | | | | KR | 10-2023-0130421 | A | 12 September 2023 |
| | | | | KR | 10-2023-0130494 | A | 12 September 2023 |
| | | | | KR | 10-2841614 | B1 | 01 August 2025 |
| | | | | KR | 10-2851188 | B1 | 28 August 2025 |
| | | | | US | 2023-0282828 | A1 | 07 September 2023 |
| KR | 10-2024-0084705 | A | 14 June 2024 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240097451
- KR 1020180028797
- KR 1020220057715